Europäisches Patentamt

(19) **European Patent Office**

Office européen des brevets

(11) Publication number: **0 275 128**
**A2**

## EUROPEAN PATENT APPLICATION

(21) Application number: **88200007.8**

(22) Date of filing: **06.01.88**

(51) Int. Cl.⁴: **B 29 B 13/02**
**B 29 B 9/06, B 29 B 17/00**

(30) Priority: **13.01.87 IT 1905787**

(43) Date of publication of application:
**20.07.88 Bulletin 88/29**

(84) Designated Contracting States:
**AT BE CH DE ES FR GB GR IT LI LU NL SE**

(71) Applicant: **FRATELLI TENCHINI S.n.c.**
**Strada dell'Orsina 4**
**I-29100 Piacenza (IT)**

(72) Inventor: **Tenchini, Mario**
**Viale Dante Alighieri, 131**
**I-29100 Piacenza (IT)**

**Tenchini, Rolando**
**Via Castagna, 11**
**I-29100 Piacenza (IT)**

(74) Representative: **de Pasquale, Carlo**
**Via Carlo Ravizza 53**
**I-20149 Milano (IT)**

(54) Machine for continuous compacting and sintering of thermoplastic materials.

(57) The invention refers to a machine which forms part of an installation for the continuous agglomeration, compacting and sintering of residues produced in the processing of materials manufactured from thermoplastic polymers.

In particular, the patent refers to a compacting and sintering machine which can sinter all types of thermoplastic materials, especially those like the polyamides which have a fusion point which is very close to the softening point, compacting them without bringing the material up to the point of fusion.

The invention consists of a spinneret constituted by a pierced ring of the type used in roller cubing machines with a ribbed roller and a smooth roller working against it as the pressure element, the material to be compacted being fed in loose, i.e. without any preliminary compression, in correspondence to the internal periphery of the ring, and the temperature of the material under processing being controlled by the injection of a gaseous coolant onto the spinneret the rollers and the material being processed by means of a rotating device provided with outlet holes in order to make the temperature of both the rollers and the material in the compression chamber uniform, the material to be compacted thus being constantly maintained in the softened state (condition) without melting, the said cooling system being backed up by the injection of more gaseous coolant on the outside of the spinneret, the amount of gaseous coolant to be injected being regulated by known methods by means of the monitoring of the temperature by probes arranged in the appropriate positions.

EP 0 275 128 A2

## Description

"MACHINE FOR CONTINUOUS COMPACTING AND SINTERING OF THERMOPLASTIC MATERIALS."

The invention concerns a component (machine) forming part of an installation for the continuous agglomeration, compaction and sintering of residues produced in the processing of materials manufactured from thermoplastic polymers.

In particular, the patent refers to the compacting and sintering machine and indications will be given for the construction of a machine which is capable of sinterising all types of thermoplastic materials and in particular, those materials such as polyamide resins with a fusion point which is very close to the softening point; i.e. capable of compacting the products which enter the machine in the form of pieces by means of compression with the production of heat, but without bringing them to the fusion point.

The manufacture of products in thermoplastic materials from raw granulates, in particular in the preparation of thin films, yarns, fabrics etc., always provides residues which should be recycled by reduction into granulates which can be re-utilised, both because of the cost of the materials themselves and for ecological reasons. Up to now, granulates produced in this way constitute material of rather poor quality because, with the systems which have been used, the materials to be compacted are either compressed together without really penetrating one another and becoming homogeneous or they are brought to the fusion point and, in this case, they lose their initial chemical and physical characteristics and appearance and generally tend to become oxidised because of the impossibility of controlling the temperature.

This is particularly true for those thermoplastics, such as polyamide resins, which have a softening point which is very close to the fusion point (a difference of approximately 4 to 5°C).

Installations for the recovery of the aforesaid residues are basically constituted: by a mill in which the material entering in the form of sheets, yarns, fabric etc. is ground down into small leaves or pieces; the machine which really carries out the compacting which this invention refers; a sieve which eliminates any dust or foreign bodies; a cooler which brings the product to the ambiental temperature; a milling machine which reduces the product which enters, normally not of uniform dimensions, to the dimensions required for subsequent processing.

The known machines for carrying out compaction for fusion of the aforementioned materials are basically constituted by two plates, one fixed and one moving, equipped with radial ridges which are very close together. The material to be compacted is introduced between these ridges from the centre, after having been previously reduced in size, and the material melts because of the heat produced by the friction and the compression, and exists from the periphery in compact but not uniform pieces.

Other machines are in effect based on the principles of the machines utilised for compacting into cubes organic substances to be used for fertilisers, fodder, oily meal, etc., commonly referred to as "cubing or pelleting" machines, reproducing their characteristics. They are generally employed for polythylene but they provide a product which is poorly compressed and therefore does not have the degree of homogeneity which is required for subsequent processing operations.

The machine built according to Italian patent no. 1,077,754, German priority P 2614230, has the same general structure as the cubing or pelletting machines, using a hollow cylinder of a given length as the extruder, which has pierced holes and is delimited on the sides by two ring walls which are cooled by the circulation of a liquid.

The material, which has been previously compacted is fed into this axially and pressure is povided by two internal arms which are sickle-shaped in order to ensure that the area between the part which slides against the inside to the cylinder and the internal part of the arm narrows down from the inside of the outside.

As has been said, with all the known systems it is not a case of compacting the materials but rather a case of combining them in a manner which is not homogeneous with no compenetration of the various sheets or pieces which compose the output products of the machines, i.e. without producing real sintering, or these machines bring the materials to fusion point with all the disadvantages which are complained of. In particular, the machine with frontal disks wastes a great deal of energy while the one with sickle-shaped arms, even though the side walls of the die are liquid-cooled, has not produced satisfactory results so far in compacting polyamide thermoplastics i.e. materials in which the point of fusion is very close to the softening point, since the system cannot regulate the temperature of the product being processed, temperatures which are generated during the functioning of the machine.

The present invention solves all these problems which have been intractable up to now, in the sense that it succeeds in compacting and sintering any type of thermoplastic polymer-based material, especially the most sophisticated ones, having the softening point and the fusion point very close together without bringing the materials up to fusion point using a very limited amount of energy, since this machine has been specially designed for these types of materials and this objective.

It was found that the material which issued from the machine according to this invention had such characteristics of high and constant apparent specific weight, of physical and granulometric homogeneity that it could in many cases be utilised directly as raw material for technical processing.

The invention consists of having thought of the following factors for obtaining the compacting and sintering of the aforesaid thermoplastic materials: using a die constituted by a pierced ring of the type used in roller "cubing" machines: still using the rollers as the pressure element but using one ribbed and one smooth roller instead of two ribbed rollers or two rollers with circular impressions; feeding the material to be compacted in loose form (in other words without previous compression) in correspondance to the internal periphery of the ring; and controlling the temperature of the material being processed by the injection of a gaseous medium onto the rollers and the material being processed by means of a rotating device provided with outlet holes, in such a way as to create a certain level of turbulence and thus obtain optimal diffusion of the coolant over the whole surface area involved; in this way rendering homogeneous the temperature of the rollers and the temperature in the compression chamber and dissipating the excess heat so that the material to be compacted is extruded from the holes of the die in the softened state (condition) without actually melting; the aforesaid system being backed up by the injection of other gaseous matter on the outside of the die, and the quantity of the gaseous matter being regulated by known means as a consequence of the monitoring of the temperatures by probes located in the appropriate positions.

The invention will be more clearly explained by the description of the embodiment described as a non-limiting example, illustrated by the attached drawings which represent:

fig 1 - a longitudinal cross-section of the machine including all the main components;,

fig 2 - an enlarged cross-section of the compacting and sintering device itself,

fig 3 - a transversal cross-section of the spinneret-pressure roller unit.

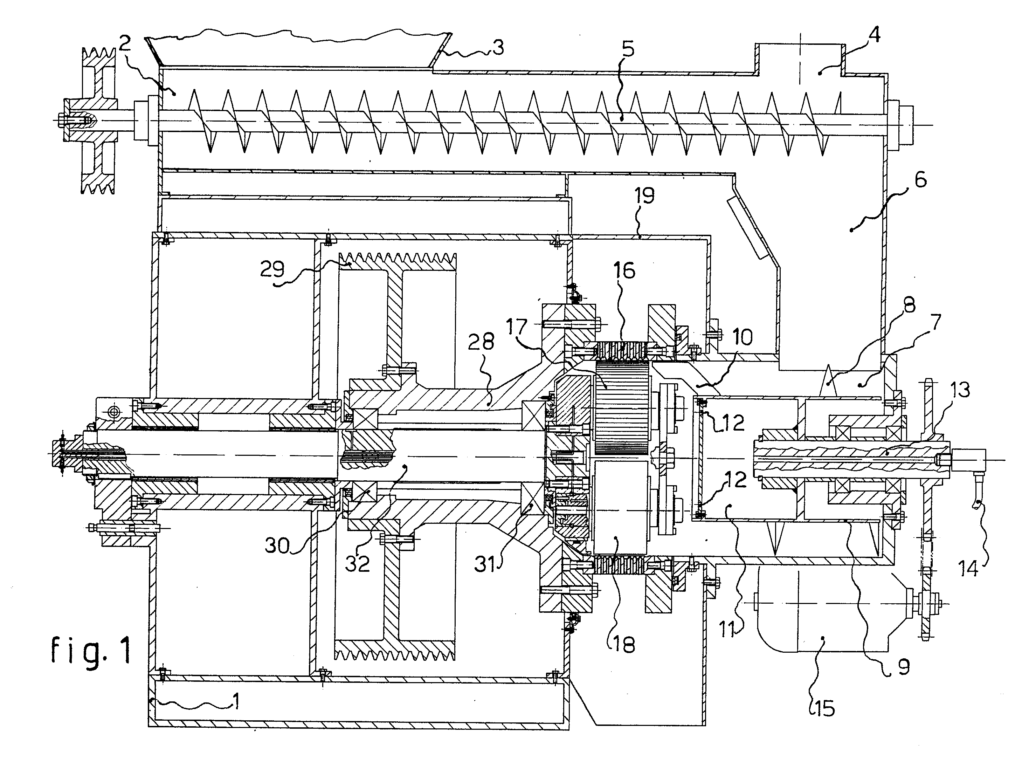

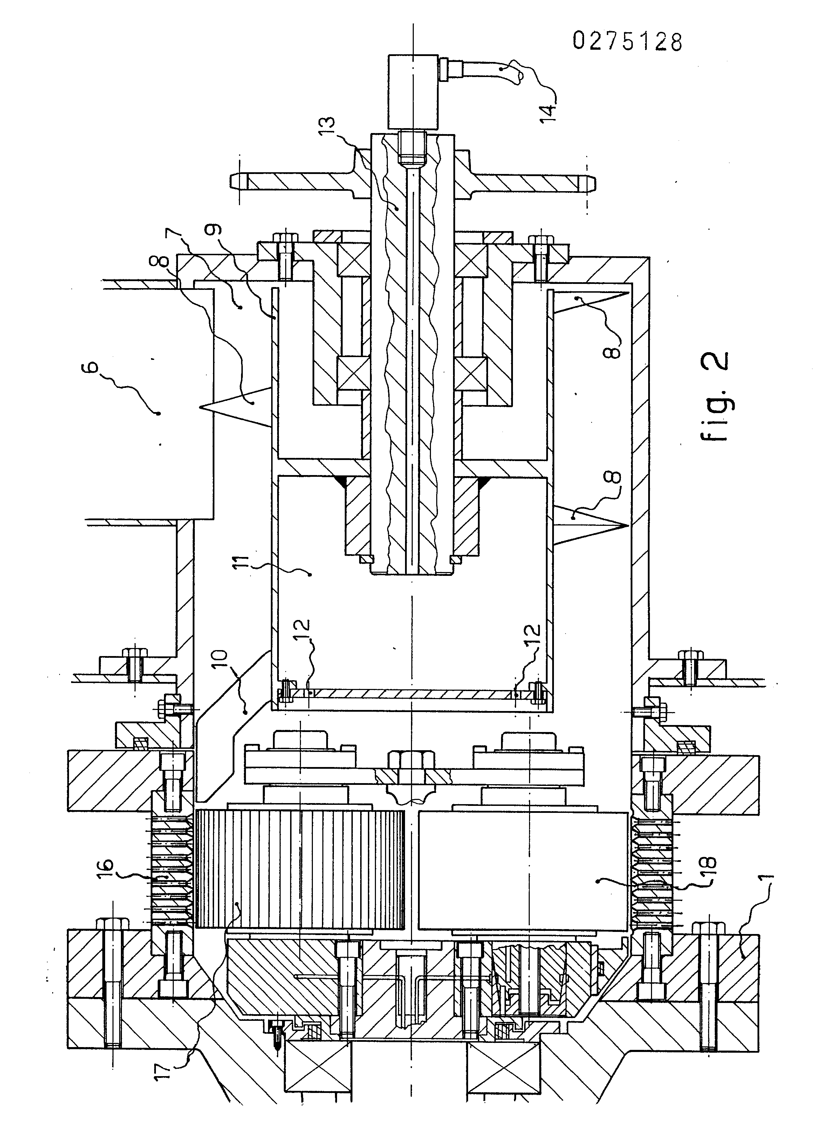

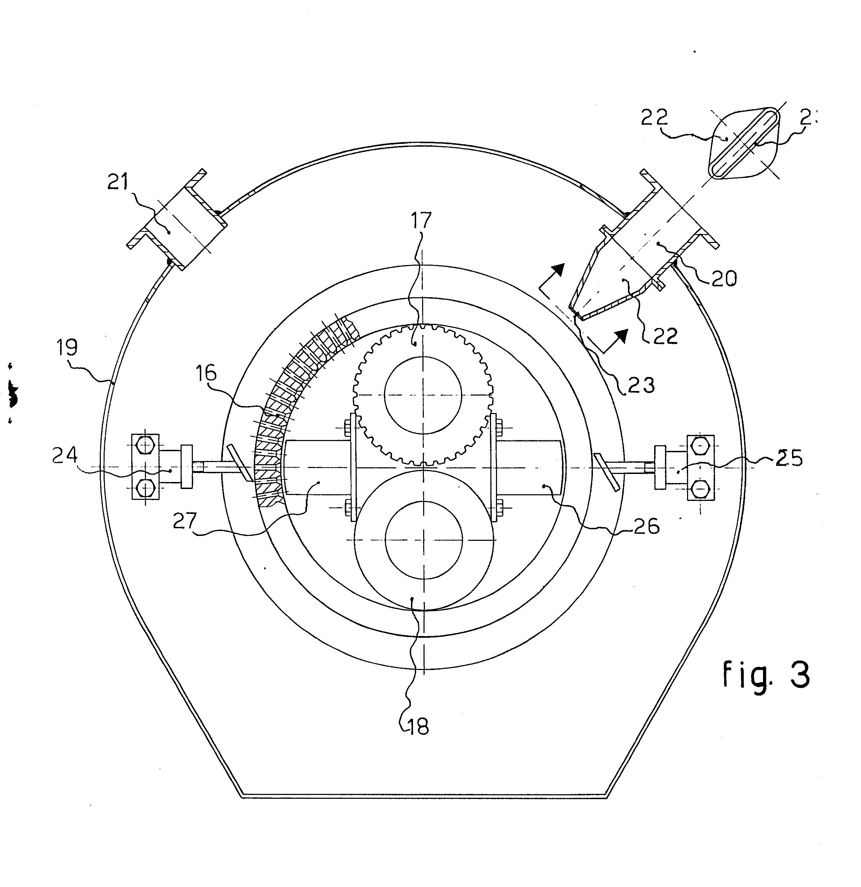

Referring to figures 1, 2, and 3, the compacting and sintering machine according to this invention is constituted by:

- a machine bed 1 capable of supporting and holding the various components of the new machine which basically consists of:-

a screw feeder 2 whose inlet communicates with a charging hopper 3 which contains the material to be compacted which arrives from the mill reduced into leaves or pieces, with an outlet 4 at the other end as a discharge flue for the gaseous coolant of the material and the spinneret unit. The screw feeder is actuated by a geared motor which is not shown in the drawing. This geared motor varies the speed of rotation of the special screw shaft 5 of the screw feeder in order to regulate the amount of material which is fed into the machine, as a function of the type and characteristics of the material undergoing processing. This regulation can easily be automated using known methods, for example by linking the regulation of the geared motor to the current absorbed by the main motor of the machine;

- a conduit 6 for the passage of the discharge of screw feeder 2 to a second screw feeder located below;

- a screw feeder 7 whose screw 8 is mounted on a hollow drum 9 which is rotated by means of a geared motor 15 and is also provided with one or more spatula arms 10, with an internal configuration which forms a chamber 11 with peripheral holes 12 pierced in the outside walls.

- a hollow shaft 13 which is an integral part of the drum 9 and rotates together with it which, after crossing the first section of the drum 9, emerges into the chamber 11 and through which the gaseous coolant is introduced, for example compressed air coming from the hose 14;

- a spinneret 16 is located at the outlet of the channel of the screw feeder 7 and communicates with it. This spinneret basically consists of an annular strip of a size which can support considerable pressure, in which a series of holes has been pierced, the size and arrangement of said holes being a function of the type of material to be processed, and being mounted on a hollow hub 28 to which a pulley 29 has also been connected, the hollow hub 28 being able to rotate on bearing 30 and 31 which are, in turn, mounted on a shaft 32 fixed to the machine bed 1 by means of an electric motor which is not shown;

- two pressure rollers mounted on the spinneret side end of the fixed shaft 32, which are practically in contact with the internal wall of the spinneret (a few hundreths of a millimetre apart) one roller 17 having a ribbed external surface and the other 18 being smooth;

- a chamber 19 containing the spinneret roller unit which also acts as a collector for the compacted product, said chamber 19 being provided with two apertures, the first 20 for the entrance of the gaseous matter which cools the spinneret and the material in output and which has an internal prolongation with a nozzle 22 whose outlet is shaped like a pair of lips 23, and the second aperture 21 for the discharge of the aforesaid coolant. Known devices installed under the chamber 19 extract the compacted and sintered material which falls to the bottom of the chamber and convey the material to the successive equipment of the installation;

- two cutting knives 24 and 25 which are on the outside of the spinneret 16;

- two scrapers 26 and 27 located on the edge of the spinneret on the side opposite the inlet whose function is to return under the rollers any material which has escaped:

The machine functions in the following way. Once the distance between the rollers 17 and 18 of the spinneret 16 has been adjusted, the machine is started up by actuating the main motor of the machine thus starting rotation of the spinneret, the geared moter actuates the screw 8 of the screw feeder 7, the geared motor actuates the screw 5 of the screw feeder 2.

The loose material contained in the hopper 3 is thus moved forward, falls through the conduit 6 and enters the screw feeder 7, is pushed by the screw 8 towards the spinneret and is directed by the arm/arms 12 towards the internal periphery of the spinneret 16, is taken by the rollers 17 and 18 and compressed between the rollers and the spinneret and from there into the holes of the spinneret. This operation produces heat (in other words, part of the mechanical energy produced by the motor which actuates the spinneret is transformed into thermal energy) and this heats the material to be processed, bringing it up to softening temperature, at which point the material can be thoroughly compacted and enter into the holes of the spinneret. This temperature, which varies according to the material being treated, is controlled and maintained within very strict limits by the presence of probes which use known methods to control the flow of a gaseous medium - for example compressed air - through the channels 14 and 13 into the chamber 11. The gaseous medium exits through the holes 12 in rotation with the hollow drum 9, flowing over the rollers, the material being processed and the internal part of the spinneret, thus ensuring that the aforementioned combination maintains a constant uniform temperature which corresponds to the temperature at which the material to be processed softens with a very good degree of accuracy.

The aforesaid combination of spinneret, rollers and material is maintained at this constant uniform temperature with the aid of the other flow of gaseous matter through nozzle 23 onto the outside of the spinneret which also provides the first cooling of the output material.

As the material gradually comes out of the spinneret, it is scraped by the knives 24 and 25, in other words it is cut into equal lengths, the length in question depending on the extruding speed and the number of knives installed. The material then falls to the bottom of the chamber 14, from which it is continuously extracted and conveyed onwards for subsequent processes.

The hot air produced by the internal cooling of the spinneret escapes through the discharge flue 4, also providing the pre-heating for the material falling through the conduit 6. The hot air produced by the external cooling of the spinneret passes through the aperture 21 and is conveyed outside by conventional methods.

Therefore with this machine, unlike the machines in current use, there is no need for a further subsequent machine which reduces the compacted and sintered product into the required granules. In many cases, the output product can be used just as it is as the starting material for processes of moulding, extrusion, film-forming etc., without the need for a further process of extrusion as is the case with other machines. This is due to the fact that this machine produces a product with a high and constant apparent specific weight and remarkable physical and granlometric uniformity.

It goes without saying that the description given above is merely an example and is non-limiting and that various modifications to this example are possible. In fact, the spinneret 16 can be stationary and the two rollers 17 and 18 can be made to rotate; there can be different arrangements of the various component parts of the machine just as systems other than gaseous coolants can be utilised to maintain the combination of rollers - spinneret - material to be processed at a constant temperature without being outside the ambit of protection of this patent.

**Claims**

1. Machine for continuous compacting and sintering of thermoplastic materials, in particular for sheets produced with polymers having a softening point which is very close to the fusion point which have been previously crumbled, consisting of a spinneret 16 constituted by a pierced annular strip against which pressure rollers act internally and cutting knives externally, characterised by the fact that a ribbed roller 17 and a smooth roller 18 are used as pressure elements instead of two ribbed rollers or rollers with circular impressions, the material to be processed being fed in loose i.e without preliminary compression, in correspondance to the internal periphery of the pierced ring, and the temperature of the material being controlled during processing by the injection of a gaseous coolant onto the rollers 17 and 18 and the material by means of a rotating device 11 provided with outlet holes 12, so as to create a certain level of turbulence thus obtaining optimal diffusion of the coolant over the whole surface area involved, thus ensuring that the temperature of the spinneret the rollers and the material in the compression chamber is constant and uniform, the excess heat being dissipated so that the material to be compacted, when it is drawn through the holes of the spinneret 16, is maintained in the softened state (conditions) without melting, the said cooling system being backed up by the injection of more gaseous coolant on the exterior of the spinneret, and the amount of gaseous coolant to be injected being regulated by known methods as a result of the monitoring of the temperatures by means of probes located in the appropriate positions.

2. Machine according to claim 1, characterised by the fact that the material is fed by means of a screw feeder 2 whose inlet communicates with a hopper 3 containing the crumbled material to be compacted and which has an aperture on the opposite end for a discharge flue 4 for the gaseous coolant of the combination of spinneret-rollers-material, the screw feeder being activated by a geared motor in order to vary the rotation speed of the screw 5 of the screw feeder as a function of the type and characteristics of the material to be processed, said regulation also being easily automated by known means, for example by linking the regulation of the geared motor to the current absorbed by the main motor of the machine.

3. Machine according to claims 1 and 2, characterised by the fact that a second screw feeder 7, with a channel arranged in axis with the spinneret 16, has its screw 8 mounted on a hollow drum 9 which is rotated by means of a geared motor 15, receives the material from screw-feeder 2 and by means of one or more spatula arms 10, mounted on the end of the drum 9, directs and distributes the material without compressing it between the spinneret and the pressure rollers.

4. Machine according to claim 3, characterised by the fact that the rotating drum 9 has an internal configuration which forms a chamber 11 in which peripheral holes 12 have been pierced.

5. Machine according to claims 1, 2 and 3, characterised by the fact that a hollow shaft 13, which forms an integral part of the drum 9 and rotates together with it, traverses the first part of the drum 9 emerging in the chamber 11, and that gaseous coolant is injected through it, for example compressed air coming from the piping 14.

6. Machine according to claim 1, characterised by the fact that the spinneret 16 is basically constituted by a ring of a thickness which can withstand considerable pressure, into which a series of holes have been bored of a diameter and arrangement depending on the type of material to be processed, and being mounted in such a way as to be rotated on a hollow hub 28 on which the pulley 29 connected to the traction motor is also installed, the hollow hub 28 being able to rotate on bearings 30 and 31, in their turn mounted on a shaft 32 fixed to the machine bed 1.

7. Machine according to claim 1 characterised by the fact that the pressure rollers, one 17 having as ribbed surface and one 18 having a smooth surface, are mounted on the end of the fixed shaft 32 on the spinneret side and that they work practically in contact with the internal wall of the spinneret (a distance of a few hundreths of a millimetre).

8. Machine according to claims 1, 6 and 7, characterised by the fact that the spinneret-roller unit is contained in a chamber 19 which also serves as a collector for the compacted product, said chamber 19 being provided with two apertures, the first 20 for the entrance of the gaseous coolant which cools the external surface of the spinneret and the material which emerges from it, an aperture which prolongs internally with a nozzle 22 with an outlet in the form of a pair of lips 23, and the second aperture 21 for the escape of the said cooling air. Known devices installed under the chamber 19 extract the compacted and sintered material which falls to the bottom of the chamber and convey the material to the subsequent equipment of the installation.

9. Machine according to claims 1, 6, and 7, characterised by the fact that the two scraper knives 24 and 25 installed on the edge of the spinneret on the opposite side to the inlet for the material are utilised to feed back under the rollers 17 and 18 any material which exits on that side.

10. Machine according to claims 1, 6 and 7 characterised by the fact that two scrapers 26 and 27 located in on the edge of the spinneret on the side opposite the inlet whose function is to return under the rollers 17 and 18 any material which has escaped on that side.

fig. 1

fig. 2

0275128

fig. 3